# FASCICULE DE BREVET EUROPEEN

(11) **EP 1 207 094 B1**
(45) Date de publication et mention de la délivrance du brevet: **05.01.2005**
(21) Numéro de dépôt: 01402947.4
(22) Date de dépôt: 16.11.2001
(51) Int. Cl.: B62D 1/19

(54) **Coquille d'habillage pour haut de colonne de direction**
Verkleidungsschale für den oberen Teil der Lenksäule
Cover shell for the upper part of a steering column

(30) Priorité: 17.11.2000 FR 0014867
(43) Date de publication de la demande: 22.05.2002
(73) Titulaire: Renault s.a.s., 92100 Boulogne Billancourt (FR)
(72) Inventeur: Pretot, Philippe, 92500 Rueil Malmaison (FR)

(56) Documents cités:
- PATENT ABSTRACTS OF JAPAN vol. 1999, no. 13, 30 novembre 1999 (1999-11-30) -& JP 11 222138 A (SUZUKI MOTOR CORP), 17 août 1999 (1999-08-17)
- PATENT ABSTRACTS OF JAPAN vol. 018, no. 605 (M-1706), 17 novembre 1994 (1994-11-17) -& JP 06 227403 A (SUZUKI MOTOR CORP), 16 août 1994 (1994-08-16)

## Description

La présente invention concerne une coquille d'habillage de haut de colonne de direction. Une telle coquille est montée sur la colonne de direction derrière le volant pour servir de logement et de protection aux divers dispositifs et connexions qui se situent dans cette zone, et notamment aux leviers et parties de mécanismes des systèmes d'inclinaison du volant par rapport à la colonne, et/ou des systèmes d'ajustement de la colonne de direction en angle et en profondeur.

De telles coquilles sont connues par exemple par les documents US 5129280, 5802924, et 5954363. On connaît aussi dans un domaine un peu différent des coquilles antivol amovibles en deux parties telles que celle montrée par le document US 4598562.

La coquille montée sur le haut de la colonne est naturellement prévue pour être compatible avec la course de réglage axial et angulaire de la colonne, c'est-à-dire qu'elle doit être montée de manière à ne pas interférer avec l'environnement immédiat, à savoir essentiellement la planche de bord (avec les compteurs, le barreau de planche de bord, etc.).

On connaît par ailleurs des dispositifs d'absorption d'énergie de colonne de direction, par exemple par les documents FR 1 549 884 ou 2 781 749, grâce auxquels la colonne de direction, et donc le volant qu'elle porte, subit en cas de choc une rétraction, cette rétraction se faisant sur une course idéalement plus longue que la course de réglage axial ordinaire de la colonne de direction.

Cependant, en pratique, afin que la rétraction de la colonne ne soit pas gênée par la coquille, il faut souvent limiter la course de rétraction à une course égale au réglage en profondeur de la colonne, ou bien réduire les dimensions de la coquille. Or ces solutions sont toutes les deux désavantageuses.

Le but de l'invention est de proposer une coquille d'habillage qui n'impose pas ces limitations et permette en particulier d'avoir une course de rétraction supérieure à la course de réglage en profondeur de la colonne de direction, ce qui augmente la sécurité du véhicule.

Le but de l'invention est atteint par une coquille d'habillage de haut de colonne de direction comprenant un carter inférieur et un carter supérieur, laissant entre eux un passage pour la colonne de direction. Le carter supérieur est constitué de deux parties télescopiques, c'est-à-dire pouvant s'emboîter et glisser l'une par rapport à l'autre en cas de poussée axiale lors de la rétraction de la colonne avec interférence de l'environnement sur la coquille. Une telle coquille selon le préambule de la revendication 1 est connue du JP-A- 11222138. Selon l'invention les deux parties de carter supérieur ont avantageusement à l'état normal (c'est-à-dire hors choc) des parois dans le prolongement l'une de l'autre, avec des bords en regard formant des plans inclinés permettant par effet de coin le passage d'une partie sur l'autre lors d'un choc. Ces parties de carter supérieur sont maintenues entre elles à l'état normal par des dispositifs d'attache frangibles. Les deux parties sont avantageusement, au moins dans la région de leur interface, sensiblement en forme de U, notamment de U plat, inversé. Une première partie du carter est dans la continuité de surface d'une seconde partie. En cas de rétraction de la colonne de direction sous l'effet d'un choc, la première partie pousse sur la seconde partie, des pattes et/ou des oreilles des dispositifs frangibles cassent et les plans inclinés entraînent la première partie au-dessus de la seconde partie, permettant à la colonne de s'enfoncer sous la planche de bord d'une valeur requise pour la sécurité. La première partie entraînée au-dessus de la seconde partie est déformée par élargissement sous l'effet d'un choc.

L'invention sera mieux comprise et d'autres avantages et caractéristiques seront mis en évidence à la lecture de la description suivante, se référant aux dessins annexés sur lesquels :
- la figure 1 est une vue en perspective schématique d'un exemple de réalisation de coquille conforme à l'invention ;
- la figure 2 est en coupe longitudinale partielle d'un détail montrant l'assemblage des deux parties de carter supérieures l'une par rapport à l'autre ;
- la figure 3 est une vue de côté schématique montrant la coquille de l'invention dans son environnement automobile.

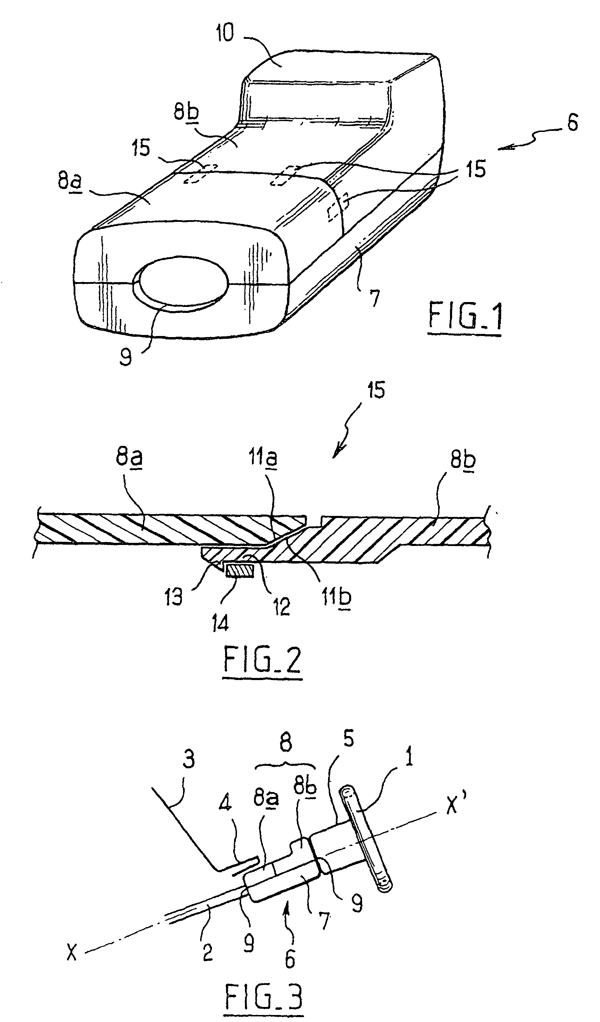

La figure 3 montre un volant 1 porté à l'extrémité supérieure de la colonne de direction 2 d'une automobile. La colonne 2 a un axe XX' qui peut être inclinable selon un certain angle limité de part et d'autre d'une position nominale et elle peut comporter des dispositifs non représentés de réglage en position axiale de la position du volant. Par ailleurs, elle comporte un dispositif, également non représenté, de rétraction en cas de choc qui permet au volant et à la colonne de s'enfoncer en profondeur dans la direction inférieure de l'axe XX'.

La colonne passe au-dessous de la planche de bord 3 et de sa traverse avant 4. Derrière le volant se trouve éventuellement un premier boîtier d'habillage 5 servant à enfermer divers mécanismes dont, par exemple, le coussin gonflable, suivi de la coquille 6 concernée par l'invention qui vient s'encastrer sous la planche de bord et qui comporte un carter inférieur 7 et un carter supérieur 8 en deux parties 8a, 8b.

Deux ouvertures 9 formées dans les carters 7, 8 d'un côté et de l'autre permettent le passage de la colonne 12. Le carter inférieur 7 est réalisé de manière très simple en berceau en U plat. Le carter supérieur 8 a une forme générale en U plat renversé s'élevant du côté du volant pour former un gradin 10 aligné sur le boîtier voisin 5.

La partie 8a du carter est dans la continuité de surface de la partie 8b mais leurs bords respectifs sont chanfreinés de manière inverse de façon à former des plans inclinés 11a, 11b coopérant l'un avec l'autre en cas de poussée axiale d'une partie sur l'autre pour permettre à la partie 8a de passer sur la partie 8b. De plus, les parties 8a et 8b sont liées l'une à l'autre par des dispositifs d'accrochage frangibles 15 esquissés sur la figure 1 et détaillés sur la figure 2 : la partie 8b comporte des pattes dirigées axialement et terminées par des crochets 13 qui viennent se bloquer derrière des oreilles 14 formées sous la surface de la partie 8a. Les parties 8a et 8b s'encliquettent donc l'une dans l'autre grâce aux dispositifs 15, ce qui assure le maintien en position des deux parties du carter supérieur 8.

En cas de rétraction de la colonne de direction sous l'effet d'un choc, la partie 8a pousse sur la partie 8b, les pattes et/ou les oreilles des dispositifs frangibles 15 cassent et les plans inclinés 11a, 11b entraînent la partie 8a au-dessus de la partie 8b, permettant à la colonne de s'enfoncer sous la planche de bord de la valeur requise pour la sécurité. La partie 8a entraînée au-dessus de la partie 8b est déformée si besoin par élargissement lors du coulissement de la partie 8b sous la partie 8a, la partie 8b entraînée au-dessous de la partie 8a est déformée si besoin par rétrecissement.

La surface externe de la partie 8a du carter est dans la continuité de la surface externe de la partie 8b, ce qui permet d'éviter la présence d'aspérités aux raccordement desdites deux parties 8a, 8b.

## Revendications

1. Coquille d'habillage de haut de colonne de direction rétractable en cas de choc, la partie supérieure de la coquille (6) étant fusible lors de la rétraction de la colonne (2), comprenant un carter inférieur (7) et un carter supérieur (8), laissant entre eux un passage pour la colonne de direction (2), le carter supérieur (8) étant constitué de deux parties télescopiques (8a, 8b), **caractérisée en ce que** les deux parties (8a, 8b) du carter supérieur ont des bords en regard formant des plans inclinés (11a, 11b).

2. Coquille selon la revendication 1, **caractérisée en ce que** les deux parties télescopiques (8a, 8b) sont maintenues entre elles par des dispositifs d'attaches frangibles (15).

3. Coquille selon l'une quelconque des revendications 1 ou 2, **caractérisée en ce que** les deux parties (8a, 8b) du carter supérieur sont sensiblement en forme de U plat inversé.

4. Coquille selon l'une quelconque des revendications 1 à 3, **caractérisée en ce qu'**une première partie (8a) du carter est dans la continuité de surface d'une seconde partie (8b).

5. Coquille selon l'une quelconque des revendications 1 à 4, **caractérisée en ce que**, en cas de rétraction de la colonne de direction sous l'effet d'un choc, une première partie (8a) pousse sur une seconde partie (8b), des pattes et/ou des oreilles des dispositifs frangibles (15) cassent et les plans inclinés (11a, 11b) entraînent la première partie (8a) au-dessus de la seconde partie (8b), permettant à la colonne de s'enfoncer sous la planche de bord d'une valeur requise pour la sécurité.

6. Coquille selon la revendication 5, **caractérisée en ce que** la première partie (8a) entraînée au-dessus de la seconde partie (8b) est déformée par élargissement sous l'effet d'un choc.

## Claims

1. A covering shroud for the top of a steering column which may be retracted in the event of an impact, the upper portion of the shroud (6) being fusible during the retraction of the column (2), comprising a lower casing (7) and an upper casing (8), leaving a passage for the steering column (2) between one another, the upper casing (8) being formed by two telescopic portions (8a, 8b), **characterised in that** the two portions (8a, 8b) of the upper casing have opposing edges forming inclined planes (11a, 11b).

2. A shroud as claimed in claim 1, **characterised in that** the two telescopic portions (8a, 8b) are held together by breakable attachment devices (15).

3. A shroud as claimed in any one of claims 1 or 2, **characterised in that** the two potions (8a, 8b) of the upper casing are substantially in the shape of an inverted flat U.

4. A shroud as claimed in any one of claims 1 to 3, **characterised in that** a first portion (8a) of the casing is continuous with respect to the surface of a second portion (8b).

5. A shroud as claimed in any one of claims 1 to 4, **characterised in that**, in the event of retraction of the steering column under the effect of an impact, a first portion (8a) pushes against a second portion (8b), tabs and/or lugs of the breakable devices (15) break and the inclined planes (11a, 11b) entrain the first portion (8a) above the second portion (8b), enabling the column to move below the dashboard to the extent required for safety purposes.

6. A shroud as claimed in claim 5, **characterised in that** the first portion (8a) entrained above the second portion (8b) is deformed by widening under the effect of an impact.

## Patentansprüche

1. Obere Verkleidungsschale für eine Lenksäule, welche im Fall eines Aufpralls zurückziebbar ist, wobei der obere Teil der Schale (6) während dem Zurückziehen der Säule (2) sicherbar ist, wobei sie ein unteres Gehäuse (7) und ein oberes Gehäuse (8) aufweist, welche zwischen sich einen Durchgang für die Lenksäule (2) verbleiben lassen, wobei das obere Gehäuse (8) aus zwei teleskopischen Teilen (8a, 8b) gebildet ist, **dadurch gekennzeichnet, dass** die zwei Teile (8a, 8b) des oberen Gehäuses gegenüberliegende Ränder aufweisen, welche geneigte Ebenen (11a, 11b) bilden.

2. Schale nach Anspruch 1, **dadurch gekennzeichnet, dass** die zwei teleskopisehen Teile (8a, 8b) untereinander durch eine ausreißbare (frz. *frangibles*) Befestigungsvorrichtung (15) gehalten sind.

3. Schale nach einem der Ansprüche 1 oder 2, **dadurch gekennzeichnet, dass** die zwei Teile (8a, 8b) des oberen Gehäuses im wesentlichen eine Form eines flachen, umgekehrten U aufweisen.

4. Schale nach einem der Ansprüche 1 bis 3, **dadurch gekennzeichnet, dass** ein erster Teil (8a) des Gehäuses in der Kontinuität der Oberfläche des Teils (8b) ist.

5. Schale nach einem der Ansprüche 1 bis 4, **dadurch gekennzeichnet dass** im Fall eines Zurückziehens (bzw. Einschiebens) der Lenksäule unter der Wirkung eines Stoßes ein erster Teil (8a) gegen einen zweiten Teil (8b) stößt, Lappen und/oder Ohren der ausreißbaren Vorrichtung (15) zerbersten und in die geneigten Ebenen (11a, 11b) den ersten Teil (8a) über den zweiten Teil (8b) mitnehmen, wobei cs so der Lenksäule ermöglicht wird, in einem für die Sicherheit geforderten Wert unter das Instrumentenbrett einzutauchen.

6. Schale nach Anspruch 5, **dadurch gekennzeichnet, dass** der erste Teil (8a), welcher oberhalb des zweiten Teils (8b) bewegt bzw. mitgenommen wird, durch eine Ausdehnung unter der Wirkung eines Aufpralls verformt wird.
